# EUROPEAN PATENT APPLICATION

(11) **EP 4 744 882 A1**
(43) Date of publication of application: **20.05.2026**
(21) Application number: 25209113.7
(22) Date of filing: 16.10.2025
(51) Int. Cl.: B32B 5/02, B32B 5/06, B32B 5/26, B32B 7/022, B32B 9/02, B32B 9/04, A47C 31/00

(54) **SPACER FABRIC AND TRIM COVER SYSTEM**

(30) Priority: 19.11.2024 US 202463722264 P; 22.09.2025 US 202519335184
(71) Applicant: Lear Corporation, Southfield, MI 48033 (US)
(72) Inventor: Burke, David, Palmyra, PA, 17078 (US)
(74) Representative: Grünecker Patent- und Rechtsanwälte PartG mbB

(57) **Abstract**

A fabric includes a first knit layer; a second knit layer; and spacer yarns extending between and connecting the first and second knit layers. The first knit layer includes a mesh fabric formed of a first yarn formation and a second yarn formation, with the mesh fabric defining a plurality of long openings and a plurality of short openings. The second knit layer includes pillar stitches and alternating stitches traversing alternating distances, which cooperate to form the second knit layer.

## Description

### CROSS-REFERENCE TO RELATED APPLICATIONS

This application claims the benefit of U.S. Provisional Application No. 63/722,264 filed November 19, 2024, the disclosure of which is incorporated in its entirety by reference herein.

### TECHNICAL FIELD

This disclosure relates to a spacer fabric, and more particularly, a spacer fabric with one or more knit layers, a composite material made of the spacer fabric, and a trim cover made of the spacer fabric.

### BRIEF DESCRIPTION OF THE DRAWINGS

FIG. 1 is a schematic perspective view of a trim cover according to an embodiment;
FIG. 2 is a schematic perspective view of a spacer fabric of the trim cover of FIG. 1;
FIG. 3 is a partial perspective view of an embodiment of the spacer fabric of FIG. 2;
FIG. 4 is a close-up perspective view of the spacer fabric of FIG. 3;
FIG. 5 is a bottom view depicting a first knit layer of the spacer fabric of FIG. 3;
FIG. 6 is a side view of the spacer yarns of the spacer fabric of FIG. 3;
FIG. 7 is a top view depicting a second knit layer of the spacer fabric of FIG. 3;
FIG. 8A is a schematic illustration of a yarn formation of the first knit layer illustrated in FIG. 5;
FIG. 8B is a schematic illustration of a yarn formation of the spacer yarns illustrated in FIG. 6; and
FIG. 8C is a schematic illustration of a yarn formation of the second knit layer illustrated in FIG. 7.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Except in any examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. As used herein, the term "about" means that the amount or value in question may be the specific value designated or some other value in its neighborhood. The term "about" or "generally" denoting a certain value is intended to denote a range within +/- 5% of the value. As one example, the phrase "about 10" denotes a range of 10+/- 5, i.e. the range from 95 to 105. When the term "about" or "generally" is used, it can be expected that similar results or effects according to the invention can be obtained within a range of +/- 5% of the indicated value. It should also be appreciated that integer ranges (e.g., for measurements or dimensions) explicitly include all intervening integers. For example, the integer range 1-10 explicitly includes 1, 2, 3, 4, 5, 6, 7, 8, 9, and 10. Similarly, the range 1 to 10 includes 1, 2, 3, 4, ... 97, 98, 99, 10. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

Also, unless expressly stated to the contrary: percent, "parts of," and ratio values are by weight; the term "polymer" includes "oligomer," "copolymer," "terpolymer," and the like; molecular weights provided for any polymers refers to weight average molecular weight unless otherwise indicated; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

Spacer fabrics are versatile and as such are usable in many different applications. A spacer fabric is flexible and thus easily bendable. A spacer fabric can also be air permeable. Another feature found in most spacer fabrics is resilience. Due to these and other unlisted advantageous properties, spacer fabric can be used in a variety of applications including, but not limited to: furniture, such as seats, mattresses and upholstered articles; vehicular components, such as climate- and non-climate automobile seats, trim and seat covers, and trim panels, such as door panels, dashboards, consoles, and headliners; and wearable articles such as, athletic shoes and clothing.

Spacer fabrics are also useable as a composite material. Suitable composite materials comprise a spacer fabric sandwiched between a cover layer, which can be decorative, such as leather, vinyl or fabric, and a base, which can be a rigid or flexible base layer. Generally, the spacer fabric is secured to the cover layer and/or base via any suitable mechanisms, such as, but not limited to, adhesives, welding, or mechanical fasteners (e.g., stitching, staples, etc.).

According to one or more embodiments, a spacer fabric is provided. The spacer fabric includes a first knit layer and a second knit layer, with spacer threads traversing therebetween. The spacer threads are stitched to the first and second knit layers. The first knit layer is formed of a first and second yarn formation that defines an open mesh pattern. The second knit layer is formed of a first and second yarn formation that has openings smaller than the openings of the open mesh pattern. Generally, the spacer fabric is air permeable and flexible for handling.

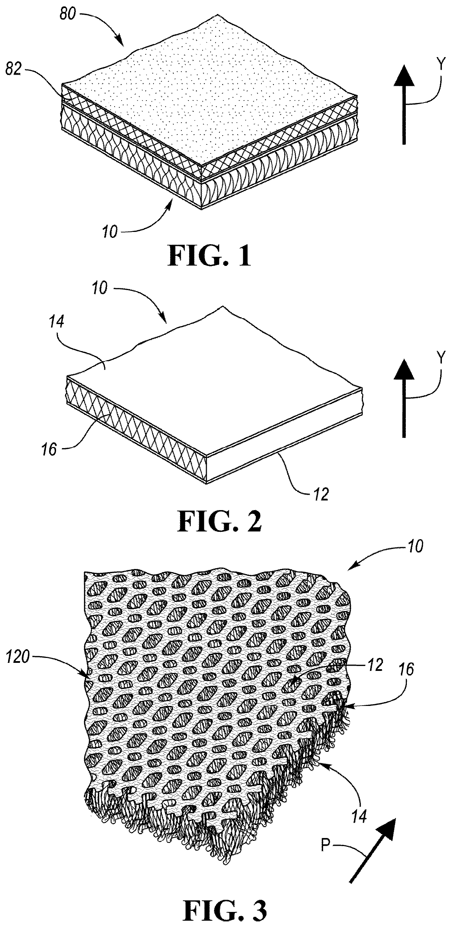

Referring to FIG. 1, a representative trim cover 80 comprising a spacer fabric 10 of the present disclosure is illustrated. The trim cover 80 is any material or composite capable of utilizing the spacer fabric 10 of the present disclosure and is representatively shown as a leather trim cover 80, as for a vehicle seat, comprising a layer of leather 82, or interchangeably trim layer 82, adhered to the spacer fabric 10. However, it should readily be understood that the composite may be, in some embodiments, other automotive or non-automotive composites. For example, the trim layer 82 may, in some embodiments, be a synthetic leather, plastic, vinyl or fabric trim cover, or combinations thereof. In further embodiments, the trim cover 80 includes a rigid or flexible base layer (not shown). Generally, the trim layer 82 has an upper surface (i.e., A-surface), which is exposed to an occupant, and a lower surface opposite to the upper surface. The spacer fabric 10 is secured to the lower surface of the trim layer 82. The leather layer 82 is secured to the spacer fabric 10 by any suitable technique, such as by, stitching, RF-welding, mechanical fasteners, adhesive, or other suitable mechanism. A seat assembly (not shown) includes a cushion with a trim cover 80 disposed thereon in a covering relationship. The trim cover 80 may be securable to the cushion via any suitable mechanism, such as, but not limited to, clips, retainers, or other fasteners or adhesives. Other features and/or components such as comfort systems, wiring, electronics, and the like, are also contemplated as being included in the seat assembly. The seat assembly may also include a seat frame for attachment or connection to a vehicle, as well as for supporting the cushion thereon and integrating any other features and/or components such as, but not limited to electrical components, wiring, or comfort components. The cushion may be any suitable foamed component (i.e., high density or low density foam), or may be a foamless cushion made from a stranded-mesh material.

Referring to FIGS. 2-4, the spacer fabric 10 is shown in detail. The spacer fabric 10 has a three-dimensional construction that comprises a first knit layer 12, a second knit layer 14 and spacer yarns 16 extending between and connecting the first and second knit layers 12 and 14. The two knit layers 12 and 14 comprise stitches that are knit in the length or machine direction as well as traversing in the width or cross direction. The spacer yarns 16 that extend between and connect the first and second knit layers 12 and 14 are any suitable yarn, and in at least one embodiment, are monofilament yarns.

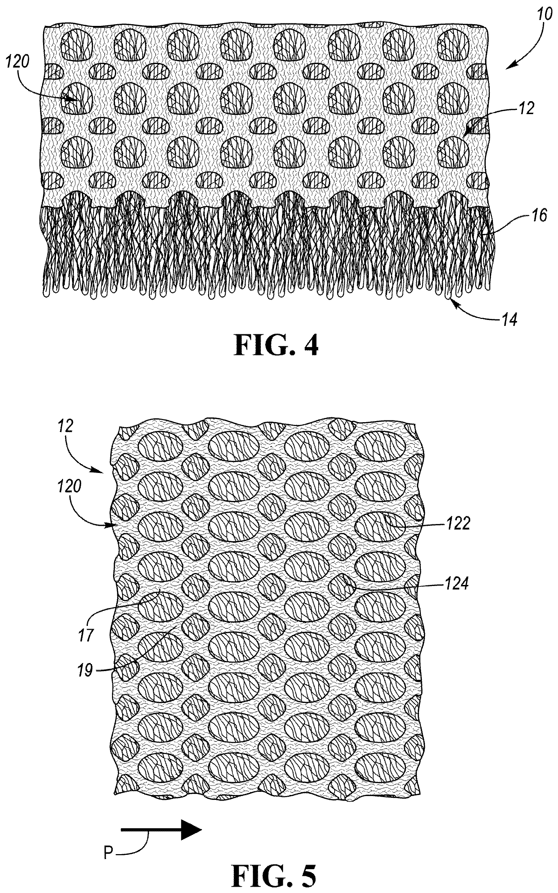

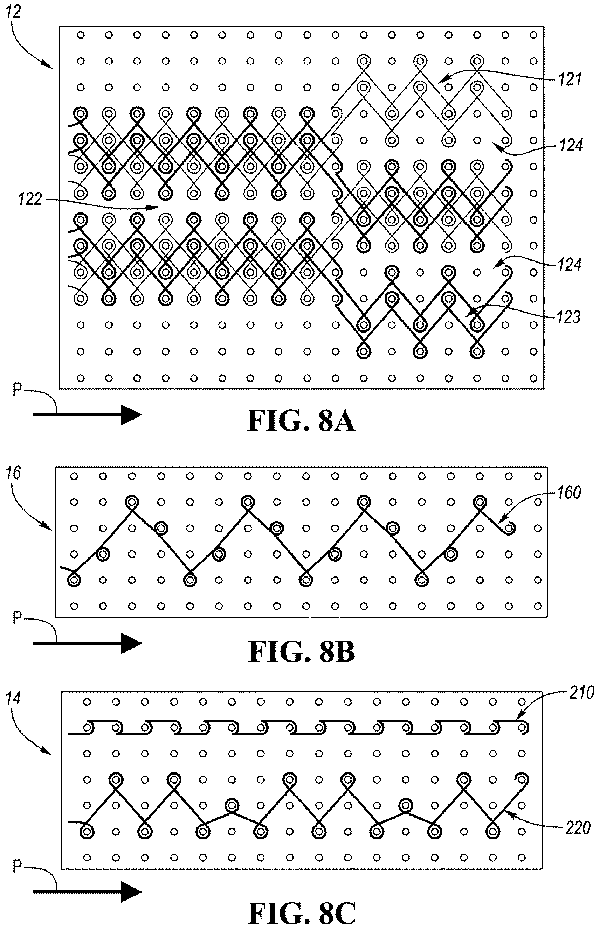

Referring to FIG. 5, and according to at least one embodiment, the first knit layer 12 of the spacer fabric 10 is shown. As can be seen in FIG. 5, the first knit layer 12 comprises stitches that form an open mesh structure. With reference to FIG. 8A, the first knit layer 12 comprises a first yarn formation 121 and a second yarn formation 123. The first yarn formation 121 and the second yarn formation 123 cooperate to form a pattern of a mesh face 120. The open mesh structure of the mesh face 120 of the second knit layer 14 has a plurality of openings 122, 124, defined by generally parallel rows of fabric intersecting generally perpendicular rows of fabric 17 forming intersections 19. As shown in the embodiment illustrated in FIG. 5 and depicted via the yarn formations in FIG. 8A, the long openings 122 are elongated and run in the production direction P, when compared to the short openings 124 which also run in the production direction P, offset from the long openings. The short openings 124 may be linearly offset (i.e., in the production direction P and/or a direction perpendicular to the production direction P) from the long openings 122. In at least one embodiment, an opening dimension, such as a length in the production direction P, of the long openings 124 is greater than an opening dimension, in the production direction P, of the short openings 124. In certain embodiments, the pattern of the mesh face 120 allows for air flow through the first knit layer 12 and generally through the spacer fabric 10, as the mesh face 120 generally is contacting the interior components of the seat in automotive applications (i.e., the seat cushion). The first knit layer 12 provides sufficient air flow (air permeability) and a level of flexibility to help to inhibit wrinkling when laminated or otherwise secured to leather or other trim material.

In at least one embodiment, and as shown in FIG. 8A, the first yarn formation 121 is a mirror image of the second yarn formation 123, which overlap to form the mesh face 120 which is a pattern that allows air to flow therethrough. The first yarn formation 121 and the second yarn formation 123 comprise the courses formed in the alternating spaced needle rows, as show in FIG. 8A, starting at the left of the Figure. In at least one embodiment, a Double Needle Bar Knitting Raschel stitching machine uses two pattern bars to create the mesh pattern. In some embodiments, the two pattern bars have at least 4 courses for each opening defined in the mesh face 120, and in yet another embodiment at least 6 courses for each mesh opening. In at least one other embodiment, the two pattern bars have at least 10 courses for each opening defined in the mesh face 120. As shown in the illustrated embodiments, the stitch formations may be exact mirrors of each other. In at least one other embodiment, the first and second yarn formations 121, 123 comprise alternating first and second course patterns. In one embodiment, the overall mesh pattern repeat, however other similar stitch formations could be used so long as they are two stitch formations that mirror each other and work together to create the mesh face 120. The long openings 122 and the short openings 124 are positioned and linearly offset based on the stitch formation and cooperation of the first yarn formation 121 and the second yarn formation 123 in the production direction P. The openings 122 and 124 in the first knit layer 12 have any suitable size, but in at least one embodiment, the short openings 124 are at least 4 courses in length, and in yet another embodiment, at least 6 courses in length, and the long openings 122 are, in at least one embodiment, at least 8 courses in length, and in yet another embodiment at least 10 courses in length. While most if not all of the openings 122, 124 fall within the above ranges, it should be understood that some may fall outside the above ranges and still be consistent with the present disclosure. In at least one embodiment, the first knit layer 12 has an open surface area of 50 to 80% based on the total surface area of the first knit layer, and in another embodiment of 60-75% based on the total surface area of the first knit layer. In at least one embodiment, the first knit layer 12 has an open surface area of about 65% based on the total surface area of the first knit layer.

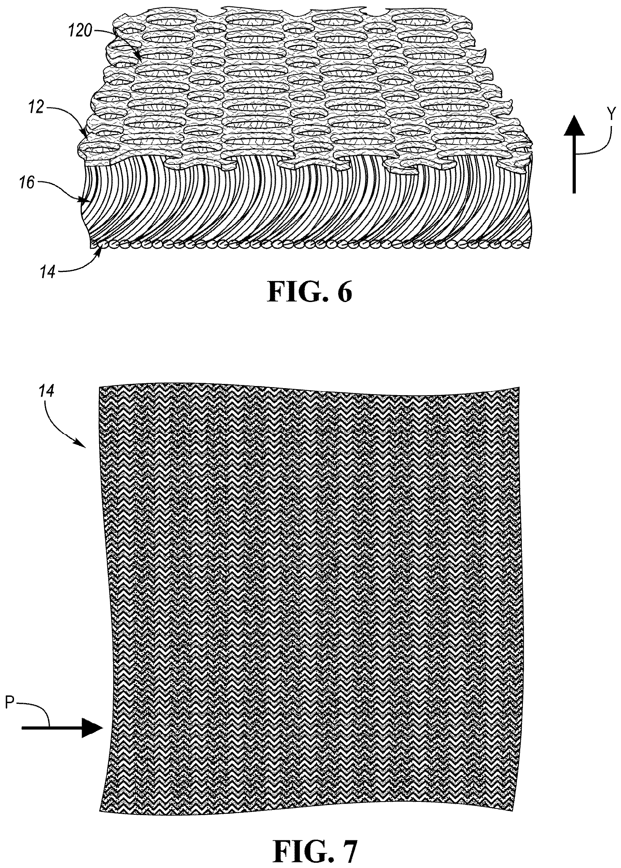

Referring to FIG. 7, and according to at least one embodiment, the second knit layer 14 of the spacer fabric 10 comprises two bars forming two design features via the stitches. The second knit layer 14 comprises a standard open pillar stitch 210 (i.e., with a notation of 0-1, 1-0) and an alternating stitch 220 (i.e., with a notation of 1-0, 2-3, 1-0, 2-3, -0, 1-2), where the alternating stitch 220 comprises a combination of alternating distances in which the stitches traverse. These two stitches work in conjunction with each other to help create a flexible fabric, allowing it to contour without appreciable wrinkling when laminated to leather or other materials. The standard open pillar stitch 210 and the alternating stitch 220 comprise the courses formed in the alternating spaced needle rows, as show in FIG. 8C, starting at the left of the Figure. The second knit layer 14 is generally the side of the spacer layer 10 that is laminated to leather/perforated leather or other trim materials. The standard open pillar stitch 210 and alternating stitch 220 work in conjunction with each other to help create a flexible fabric, allowing it to contour without appreciable wrinkling when laminated to leather or other materials. The second knit layer 14 is generally the side of the spacer layer 10 that is laminated to perforated leather or other trim materials.

The second knit layer 14 provides a generally flat side which is laminated to the leather or other trim material, opposite to the first knit layer 12 which contacts the cushion. This flat substantially non-mesh side has the two stitch formations that create the flat side, which generally accepts the laminated leather. The two stitch formations help to enable the flexibility which can help to inhibit wrinkling when laminated to leather or other trim material. Generally, the open mesh structure of the first knit layer 12 has a plurality of openings 122, 124 that are generally larger than the plurality of openings (not marked) of the second knit layer 14. As a result, the second knit layer 14 is generally smoother than the first knit layer 12, at least in certain embodiments. The smoothness of the knit layers may be measured by a profilometer. The smoother surface of the second knit layer 14 creates a flatter surface for adhering the spacer fabric 10 to the trim layer 82 in forming the trim cover 80. Notably, while the second knit layer 14 has a substantially solid structure, its openings are smaller than openings 122, 124 and thus has more of a solid structure when compared with the first knit layer 12.

Referring to FIG. 6 and FIG. 8B, the spacer yarns 16 and an exemplary stitch formation 160 for the spacer yarns 16 is illustrated. In at least one embodiment, and as shown in FIG. 8B, the connecting spacer yarns 16 are monofilaments and comprise a four-course repeat. In at least the illustrated embodiment, the connecting spacer yarns 16 has a stich notation of 1-0, 2-1, 3-4, 2-3. This stitch helps to create a stable fabric connection that has good compression properties and prevents fabric layover or uneven collapsing under pressure. The spacer yarns 16 provide a center connecting area that allows for a maintained thickness, such as 10 mm, but can be mechanically adjusted to offer other thicknesses.

In at least one embodiment, the spacer layer 10 has a thickness of 2-14 mm, in another embodiment of 2-12 mm, and in yet another embodiment of2-10 mm. In at least one embodiment, the spacer layer 10 has a thickness of 10 mm.

In at least one embodiment, the spacer fabric 10 has a compression force deflection, as measured by ISO3386-1, in the machine direction (MD) of 10 to 15 kPa, and in at least another embodiment of 11 to 13 kPa. In at least one embodiment, the spacer fabric 10 has an air permeability, as measured by DIN EN ISO 9237 of 3,800 to 4,800 l/dm2xmin, and in at least another embodiment of 4,000 to 4,400 l/dm2xmin. In at least certain embodiments, the spacer fabric 10 provides a fabric ideal for use in an automobile seat application, such as using a perforated leather or other material outer layer with the spacer fabric 10 being used as the inner layer and being laminated to the perforated outer layer. The spacer fabric 10 can offer good air flow properties, while being both supportive and flexible.

A method for forming a spacer fabric is also provided according to one or more embodiments. The method includes forming a first knit layer from a first yarn formation and a second yarn formation which cooperate to define a mesh face for the first knit layer. The mesh face includes a plurality of long openings running in the production direction P, and a plurality of short openings also running in the production direction P and offset from the long openings. The short openings may be linearly offset in the production direction P and/or a direction perpendicular to the production direction P. The short openings have an opening dimension (i.e., a length as measured in the production direction P) that less than an opening dimension of the long openings. The method also includes forming a second knit layer from a combination of pillar stitches and alternating stitches which traverse alternating distances. The pillar stitches may be a standard open pillar stitch with a notation of 0-1, 1-0. The alternating stitches may have a notation of 1-0, 2-3, 1-0, 2-3, -0, 1-2)). The method also includes connecting the first knit layer and second knit layer via monofilament spacer yarns traversing therebetween to form a spacer. In at least one embodiment, the method further includes securing the spacer to a trim layer. The trim layer may be any suitable material or composite, such as but not limited to leather, synthetic leather, plastic, vinyl, fabric, or combinations thereof. The securing may be via stitching, RF-welding, mechanical fasteners, adhesive, or combinations thereof. In at least one further embodiment, the securing of the spacer to the trim layer includes attaching the second knit layer to a bottom surface of the trim layer. The bottom surface is opposite to an upper surface (or A-surface) of the trim layer, that would contact an occupant. The method further includes, forming the first knit layer includes using two pattern bars with at least 4 courses for each opening in the mesh face.

### ASPECTS ARE:

Aspect 1. A fabric comprises a first knit layer; a second knit layer; and spacer yarns extending between and connecting the first and second knit layers. The first knit layer comprises a mesh fabric formed of a first yarn formation and a second yarn formation, with the mesh fabric defining a plurality of long openings and a plurality of short openings. The second knit layer comprises pillar stitches and alternating stitches traversing alternating distances, which cooperate to form the second knit layer.

Aspect 2. The fabric of aspect 1, wherein the short openings are linearly offset from the long openings in a production direction.

Aspect 3. The fabric of any of the preceding aspects, wherein the first yarn formation and the second yarn formation are mirror images of each other.

Aspect 4. The fabric of any of the preceding aspects, wherein openings in the second knit layer are smaller than the long openings and the short openings of the first knit layer.

Aspect 5. The fabric of any of the preceding aspects, wherein the pillar stitches are open pillar stitch with a notation of 0-1, 1-0.

Aspect 6. The fabric of any of the preceding aspects, wherein the alternating stitch comprises a notation of 1-0, 2-3, 1-0, 2-3, -0, 1-2.

Aspect 7. The fabric of any of the preceding aspects, wherein the second knit layer comprises courses for each stitch, and the courses are formed in the alternating spaced needle rows.

Aspect 8. The fabric of any of the preceding aspects, wherein the short openings have an opening dimension that is less than an opening dimension of the long openings.

Aspect 9. A trim cover comprises a trim layer comprising an upper surface and a lower surface; and a three-dimensional spacer fabric secured to the lower surface of the trim layer. The three-dimensional spacer fabric comprises a first knit layer comprising a mesh fabric formed of a first yarn formation and a second yarn formation, the mesh fabric defining a plurality of long openings and a plurality of short openings, and a second knit layer comprising pillar stitches and alternating stitches traversing alternating distances, which cooperate to form the second knit layer. The three-dimensional spacer fabric also comprises monofilament spacer yarns extending between and connecting the first and second knit layers.

Aspect 10. The trim cover of aspect 9, wherein the second knit layer contacts the lower surface of the trim layer.

Aspect 11. The trim cover of aspects 9 or 10, wherein the second knit layer is generally smoother than the first knit layer.

Aspect 12. The trim cover of aspects 9, 10, or 11, wherein the short openings have an opening dimension that is at least 4 courses in length, and the long openings have an opening dimension that is at least 8 courses in length.

Aspect 13. The trim cover of any of aspects 9-12, wherein the short openings are linearly offset from the long openings in a production direction.

Aspect 14. The trim cover of any of aspects 9-13, wherein the first yarn formation and the second yarn formation are mirror images of each other.

Aspect 15. A cushion assembly comprises a cushion; and the trim cover of any of aspects 9-14 at least partially covering the cushion such that the first knit layer contacts a surface of the cushion.

Aspect 16. A seat assembly comprises a seat frame; and the cushion assembly of aspect 15 installed on the seat frame.

Aspect 17. A method comprising forming a first knit layer from a first yarn formation and a second yarn formation which cooperate to define a mesh face for the first knit layer, the mesh face comprising a plurality of long openings and a plurality of short openings; forming a second knit layer from a combination of pillar stitches and alternating stitches which traverse alternating distances; and connecting the first knit layer and second knit layer via monofilament spacer yarns traversing therebetween to form a spacer.

Aspect 18. The method of aspect 17, further comprising securing the spacer to a trim layer.

Aspect 19. The method of aspect 18, wherein securing the spacer comprises attaching the second knit layer to a bottom surface of the trim layer.

Aspect 20. The method of any of aspects 17-19, wherein forming the first knit layer comprises using two pattern bars with at least 4 courses for each opening in the mesh face.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A fabric, comprising:
a first knit layer;
a second knit layer; and
spacer yarns extending between and connecting the first and second knit layers,
wherein, the first knit layer comprises a mesh fabric formed of a first yarn formation and a second yarn formation, the mesh fabric defining a plurality of long openings and a plurality of short openings: and
wherein the second knit layer comprises pillar stitches and alternating stitches traversing alternating distances, which cooperate to form the second knit layer.

2. The fabric of claim 1, wherein the short openings are linearly offset from the long openings in a production direction.

3. The fabric of any of the preceding claims, wherein the first yarn formation and the second yarn formation are mirror images of each other.

4. The fabric of any of the preceding claims, wherein openings in the second knit layer are smaller than the long openings and the short openings of the first knit layer.

5. The fabric of any of the preceding claims, wherein the pillar stitches are open pillar stitch with a notation of 0-1, 1-0,
and/or wherein the alternating stitch comprises a notation of 1-0, 2-3, 1-0, 2-3, -0, 1-2.

6. The fabric of any of the preceding claims, wherein the second knit layer comprises courses for each stitch, and the courses are formed in the alternating spaced needle rows,
and/or wherein the short openings have an opening dimension that is less than an opening dimension of the long openings.

7. A trim cover comprising:
a trim layer comprising an upper surface and a lower surface; and
a three-dimensional spacer fabric secured to the lower surface of the trim layer, the three-dimensional spacer fabric comprising:
a first knit layer comprising a mesh fabric formed of a first yarn formation and a second yarn formation, the mesh fabric defining a plurality of long openings and a plurality of short openings;
a second knit layer comprising pillar stitches and alternating stitches traversing alternating distances, which cooperate to form the second knit layer; and
monofilament spacer yarns extending between and connecting the first and second knit layers.

8. The trim cover of claim 7, wherein the second knit layer contacts the lower surface of the trim layer,
and/or wherein the second knit layer is generally smoother than the first knit layer.

9. The trim cover of claim 7 or 8, wherein the short openings have an opening dimension that is at least 4 courses in length, and the long openings have an opening dimension that is at least 8 courses in length,
and/or wherein the short openings are linearly offset from the long openings in a production direction.

10. The trim cover of any of claims 7 to 9, wherein the first yarn formation and the second yarn formation are mirror images of each other.

11. A cushion assembly comprising:
a cushion; and
the trim cover of any of claims 7 to 10 at least partially covering the cushion such that the first knit layer contacts a surface of the cushion.

12. A seat assembly comprising:
a seat frame; and
the cushion assembly of claim 11 installed on the seat frame.

13. A method comprising:
forming a first knit layer from a first yarn formation and a second yarn formation which cooperate to define a mesh face for the first knit layer, the mesh face comprising a plurality of long openings and a plurality of short openings;
forming a second knit layer from a combination of pillar stitches and alternating stitches which traverse alternating distances; and
connecting the first knit layer and second knit layer via monofilament spacer yarns traversing therebetween to form a spacer.

14. The method of claim 13, further comprising securing the spacer to a trim layer,
preferably wherein securing the spacer comprises attaching the second knit layer to a bottom surface of the trim layer.

15. The method of claim 13 or 14, wherein forming the first knit layer comprises using two pattern bars with at least 4 courses for each opening in the mesh face.
